# EUROPÄISCHE PATENTSCHRIFT

(11) **EP 2 495 139 B1**
(45) Veröffentlichungstag und Bekanntmachung des Hinweises auf die Patenterteilung: **26.02.2014**
(21) Anmeldenummer: 11009522.1
(22) Anmeldetag: 02.12.2011
(51) Int. Cl.: B60R 21/36

(54) **Kraftfahrzeug mit einer Frontklappe**
Motor vehicle with a front bonnet
Un véhicule automobile avec un capot

(30) Priorität: 01.03.2011 DE 102011012692
(43) Veröffentlichungstag der Anmeldung: 05.09.2012
(73) Patentinhaber: AUDI AG, 85045 Ingolstadt (DE)
(72) Erfinder: Roth, Franz, 93336 Altmannstein (DE); Pfaller, Bernhard-Konrad, Zandt 85095 Denkendorf (DE); Liepold, Stefan, 93059 Regensburg (DE); Dix, Norman, 85055 Ingolstadt (DE)
(74) Vertreter: Engelhardt, Harald

(56) Entgegenhaltungen:
- JP-A- 2004 168 111
- US-A1- 2002 074 775
- US-A1- 2005 205 333

## Beschreibung

Die Erfindung bezieht sich auf ein Kraftfahrzeug mit einer Frontklappe, welche über zwei in ihrem rückwärtigen Bereich angeordnete Scharniere verschwenkbar an der Karosserie des Kraftfahrzeuges gehalten ist, sowie ein im hinteren Randbereich der Frontklappe befestigtes Airbagmodul, wobei bei Auslösung des Airbagmoduls ein in dem Airbagmodul aufgenommener Airbag durch einen Spalt zwischen dem hinteren Rand der Frontklappe und einer sich daran anschließenden Frontscheibe hindurch gelangt und sich vor der Windschutzscheibe zum Schutz eines Fußgängers oder Zweiradfahrers aufbläst.

Eine gattungsgemäße Anordnung ist bspw. aus der JP 2003-089333 A bekannt. Dort wird die Frontklappe durch ein Außenblech und ein Innenblech gebildet, welche im Randbereich durch Umbördelung miteinander verbunden sind. Das Innenblech weist im Abstand vom hinteren Rand der Frontklappe eine trapezförmige Einprägung auf, welche zusammen mit dem Außenblech ein die Frontklappe versteifendes Hohlprofil bildet.

Durch die zurückversetzte Einprägung ergibt sich zwischen dieser und dem Rand der Frontklappe ein Raum, in dem ein Airbagmodul für einen sogenannten Scheibenairbag aufgenommen ist. Das aus Kunststoff bestehende Gehäuse des Airbagmoduls wird durch eine Schraubverbindung an der Einprägung im Innenblech gehalten. Das Gehäuse weist eine Sollbruchstelle auf, wodurch ein gezieltes Aufreißen des Gehäuses bei Auslösung des Airbagmoduls erreicht wird.

Die vorbekannte Lösung orientiert sich an dem herkömmlichen Aufbau einer Frontklappe. Das Gewicht des Airbagmoduls wird über das Kunststoffgehäuse durch die auf einer Seite angeordneten Schrauben auf die Frontklappe übertragen, wodurch sich eine ungünstige Beanspruchung des Airbagmoduls ergibt. Zudem belastet das Gewicht des Airbagmoduls das Innenblech, so dass zur Vermeidung von Verformungen ein insgesamt stärkeres Innenblech verwendet werden muss.

Ferner offenbart die JP 2004-168111 A eine Frontklappe mit einem Außenblech an dem das Airbagmodul an einer Verstärkung befestigt ist.

Nachteilig hierbei ist jedoch das Gewicht, das auf das Außenblech einwirkt.

Der vorliegenden Erfindung liegt die Aufgabe zugrunde, mit einfachen Mitteln eine geschützte Unterbringung für ein Airbagmodul in einer Frontklappe zu schaffen, welche zudem die Frontklappe in dem kritischen Bereich zwischen den Scharnieren verstärkt.

Die Aufgabe wird dadurch gelöst, dass zwischen den beiden Scharnieren ein nach hinten offenes, separates Verstärkungsprofil angeordnet ist, welches das Airbagmodul aufnimmt und das sowohl am Außenblech, als auch am Innenblech befestigt ist und damit die beiden Bleche verbindet. Das Verstärkungsprofil kompensiert die Kräfte, die durch die Masse des Airbagmoduls auf die Frontklappe einwirken und gewährleistet gleichzeitig eine stabile und sichere Unterbringung des Airbagmoduls. Das Airbagmodul muss aus diesem Grunde nicht vollständig in einem eigenen Gehäuse angeordnet sein. Das Verstärkungsprofil lässt sich genau auf die zusätzlichen Belastungen durch das Airbagmodul abstimmen; die Verwendung eines insgesamt dickeren Innenbleches für die Frontklappe ist nicht notwendig.

Zusammenfassend ist festzustellen, dass durch die erfindungsgemäße Ausgestaltung eine kosten- und gewichtsoptimierte Integration des Airbagmoduls gegeben ist. Dies unterscheidet den neuen Lösungsweg wesentlich von den bekannten Anordnungen, bei denen das Airbagmodul nur an das Innenblech der Frontklappe angeschraubt wird.

Dieses Verstärkungsprofil ist - wie der Name an sich schon ausdrückt - in der Dicke und/oder Festigkeit größer bemessen als das Außenblech bzw. das Innenblech. Natürlich lässt sich das Verstärkungsprofil, welches bevorzugt aus Stahlblech besteht, analog dem Außenblech und dem Innenblech zusammenfügen und befestigen, bspw. durch Bördelung, Klebung und Schweißung.

Die Unteransprüche 2 und 3 haben vorteilhafte Querschnitte des Verstärkungsprofils bzw. die Anbindung des Verstärkungsprofils an das Außenblech und/oder das Innenblech zum Gegenstand.

Gemäß einer vorteilhaften Weiterbildung der Erfindung kann das Verstärkungsprofil durch eine lösbare Abdeckung verschlossen sein. Diese ist bevorzugt als Kunststoffteil mit einer Sollbruchstelle zur gezielten Entfaltung des Airbags ausgeführt.

Zwei Ausführungsbeispiele der Erfindung sind in der Zeichnung dargestellt und werden nachfolgend näher beschrieben. Es zeigen:
- Figur 1: im Längsschnitt den rückwärtigen Bereich der Frontklappe eines Kraftfahrzeuges mit einem aufgenommenen Airbagmodul und
- Figur 2: ein weiteres Ausführungsbeispiel anhand einer vergleichbaren Schnittdarstellung, weshalb für gleiche Teile auch dieselben Bezugszeichen verwendet werden.

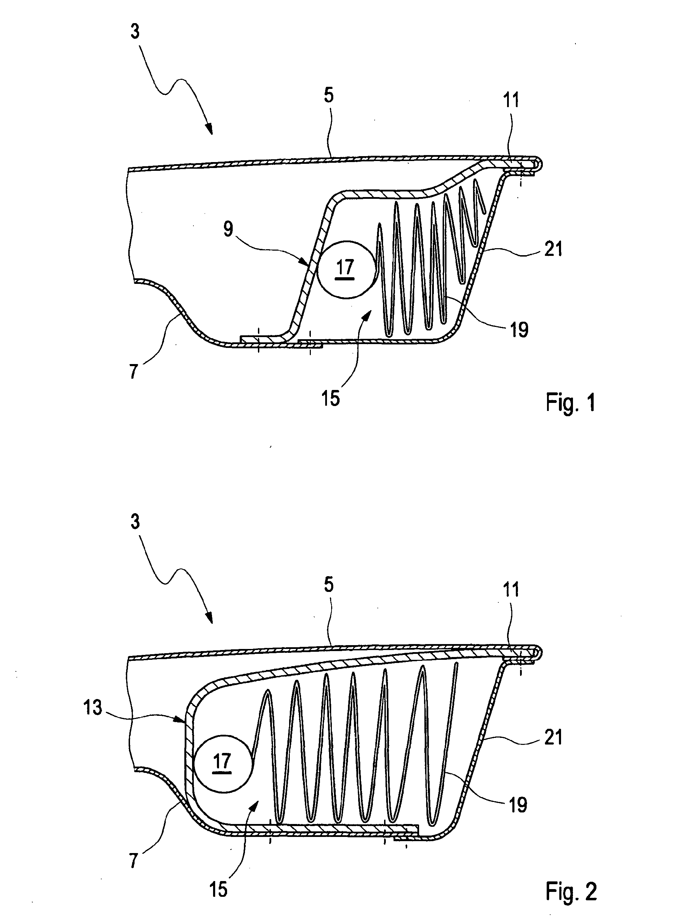

Die Figuren 1 und 2 zeigen den rückwärtigen Bereich einer Frontklappe 3, welche im Wesentlichen durch ein flächiges Außenblech 5 und ein profiliertes Innenblech 7 gebildet ist.

Die Verbindung des Außenbleches 5 mit dem Innenblech 7 erfolgt gemäß Figur 1 durch ein Z-förmiges Verstärkungsprofil 9, dessen innerer Rand 11 von dem Außenblech 5 umgriffen wird.

Eine ähnliche Befestigung ist bei dem Ausführungsbeispiel gemäß Figur 2 gewählt, mit dem Unterschied, dass dort das Verstärkungsteil 13 einen U-förmigen Querschnitt aufweist. In beiden Fällen ist jedoch das Verstärkungsprofil 9 bzw. 13 dicker als das Außenblech 5 und das Innenblech 7 ausgeführt. Die Verstärkungsprofile 9 bzw. 13 erstrecken sich annähernd über die gesamte Breite der Frontklappe 3 bis nahe an die in der Zeichnung nicht wiedergegebenen Frontklappenscharniere. In den von den Verstärkungsprofilen 9 und 13 teilweise umschlossenen Räumen ist je ein Airbagmodul 15 angeordnet, das unter anderem einen Gasgenerator 17 und einen Airbag 19 umfasst.

Die Airbagmodule 15 sind in beiden Fällen durch eine Abdeckung 21 verschlossen. Die aus Kunststoff hergestellten Abdeckungen 21 weisen Sollbruchstellen (nicht dargestellt) auf, so dass bei gezündetem Gasgenerator 17 der Airbag 19 die Abdeckung 21 an den Sollbruchstellen aufreißen und sich gezielt entfalten kann. Dabei gelangt der Airbag durch einen Spalt zwischen dem hinteren Rand der Frontklappe 3 und einer sich daran anschließenden Frontscheibe (nicht dargestellt) in eine Position vor die Windschutzscheibe, wodurch das Verletzungsrisiko eines aufschlagenden Fußgängers oder Zweiradfahrers reduziert wird.

## Patentansprüche

1. Kraftfahrzeug mit einer Frontklappe (3), welche
- zumindest in ihrem rückwärtigen Bereich ein Außenblech (5) und ein Innenblech (7) aufweist,
- über zwei in ihrem rückwärtigen Bereich angeordnete Scharniere verschwenkbar an der Karosserie des Kraftfahrzeuges gehalten ist und
- eine Airbagmodul (15) beinhaltet, wobei bei Auslösung des Airbagmoduls (15) ein in dem Airbagmodul (15) aufgenommener Airbag (19) durch einen Spalt zwischen dem hinteren Rand der Frontklappe (3) und einer sich daran anschließenden Frontscheibe hindurch gelangt und sich vor der Windschutzscheibe zum Schutz eines Fußgängers oder Zweiradfahrers aufbläst,
**dadurch gekennzeichnet, dass** die Frontklappe ein separates, nach hinten offenes Verstärkungsprofil (9, 13) aufweist,
- das am Außenblech (5) und am Innenblech (7) befestigt und
- zwischen den beiden Scharnieren angeordnet ist und
- das das Airbagmodul (15) aufnimmt.

2. Kraftfahrzeug nach Anspruch 1, **dadurch gekennzeichnet, dass** das Verstärkungsprofil (13) einen U-förmigen Querschnitt aufweist.

3. Kraftfahrzeug nach Anspruch 1, **dadurch gekennzeichnet, dass** das Verstärkungsprofil (9) einen Z-förmigen Querschnitt aufweist.

4. Kraftfahrzeug nach einem der Ansprüche 1 bis 3, **dadurch gekennzeichnet, dass** das Außenblech (5) und/oder das Innenblech (7) durch Umbördelung mit dem Verstärkungsprofil (9; 13) verbunden ist.

5. Kraftfahrzeug nach einem der Ansprüche 1 bis 4, **dadurch gekennzeichnet, dass** das Verstärkungsprofil (9; 13) durch eine lösbare Abdeckung (21) verschlossen ist.

6. Kraftfahrzeug nach Anspruch 4, **dadurch gekennzeichnet, dass** die Abdeckung (21) als Kunststoffteil mit einer Sollbruchstelle zur gezielten Entfaltung des Airbags (19) ausgebildet ist.

## Claims

1. Motor vehicle having a front bonnet (3) which
- comprises an outer panel (5) and an inner panel (7) at least in its rear region,
- is pivotably held on the body of the motor vehicle by means of two hinges arranged in its rear region and
- contains an airbag module (15), an airbag (19) received in the airbag module (15) reaching through a gap between the rear edge of the front bonnet (3) and an adjoining windscreen when the airbag module (15) is triggered, and inflating in front of the windscreen to protect a pedestrian or a cyclist, **characterised in that** the front bonnet comprises a separate reinforcing profile (9, 13) which is open towards the rear,
- is fixed to the outer panel (5) and the inner panel (7),
- is arranged between the two hinges and
- receives the airbag module (15).

2. Motor vehicle according to claim 1, **characterised in that** the reinforcing profile (13) has a U-shaped cross section.

3. Motor vehicle according to claim 1, **characterised in that** the reinforcing profile (9) has a Z-shaped cross section.

4. Motor vehicle according to any of claims 1 to 3, **characterised in that** the outer panel (5) and/or the inner panel (7) is connected to the reinforcing profile (9, 13) by flanging.

5. Motor vehicle according to any of claims 1 to 4, **characterised in that** the reinforcing profile (9, 13) is closed by a detachable cover (21).

6. Motor vehicle according to claim 4, **characterised in that** the cover (21) is formed as a plastics part having a predetermined breaking point for deploying the airbag (19) in a targeted manner.

## Revendications

1. Véhicule automobile avec un capot (3)
- qui comporte au moins dans sa zone arrière une tôle extérieure (5) et une tôle intérieure (7),
- qui est maintenu de manière à pouvoir pivoter, par deux charnières agencées dans sa zone arrière, sur la carrosserie du véhicule automobile et
- qui contient un module de coussin gonflable (15), un coussin gonflable (19) logé dans le module de coussin gonflable (15) passant, lors du déclenchement du module de coussin gonflable (15), par une fente entre le bord arrière du capot (3) et un pare-brise qui fait suite à celui-ci et se gonflant devant le pare-brise pour protéger un piéton ou un cycliste, **caractérisé en ce que** le capot comporte un profil de renfort (9, 13) séparé, ouvert vers l'arrière,
- qui est fixé à la tôle extérieure (5) et à la tôle intérieure (7),
- qui est agencé entre les deux charnières et
- qui loge le module de coussin gonflable (15).

2. Véhicule automobile selon la revendication 1, **caractérisé en ce que** le profil de renfort (13) a une section transversale en forme de U.,

3. Véhicule automobile selon la revendication 1, **caractérisé en ce que** le profil de renfort (9) a une section transversale en forme de Z.

4. Véhicule automobile selon l'une des revendications 1 à 3, **caractérisé en ce que** la tôle extérieure (5) et/ou la tôle intérieure (7) sont assemblées au profil de renfort (9 ; 13) par bordage.

5. Véhicule automobile selon l'une des revendications 1 à 4, **caractérisé en ce que** le profil de renfort (9 ; 13) est fermé par un couvercle (21) amovible.

6. Véhicule automobile selon la revendication 4, **caractérisé en ce que** le couvercle (21) est conçu comme une pièce plastique avec un point destiné à la rupture qui est prévu pour le déploiement ciblé du coussin gonflable (19).
